# EUROPEAN PATENT SPECIFICATION

(11) **EP 3 036 725 B1**
(45) Date of publication and mention of the grant of the patent: **10.10.2018**
(21) Application number: 14752879.8
(22) Date of filing: 20.08.2014
(51) Int. Cl.: G08C 17/02, H05B 37/02

(54) **DEVICE CONTROL VIA MIXED RADIO SYSTEMS**
VORRICHTUNGSSTEUERUNG MITTELS GEMISCHTER FUNKSYSTEME
COMMANDE DE DISPOSITIF PAR LE BIAIS DE SYSTÈMES RADIO MIXTES

(30) Priority: 20.08.2013 EP 13181058
(43) Date of publication of application: 29.06.2016
(73) Proprietor: Philips Lighting Holding B.V., 5656 AE Eindhoven (NL)
(72) Inventor: HOLTMAN, Koen Johanna Guillaume, NL-5656 AE Eindhoven (NL); ERDMANN, Bozena, NL-5656 AE Eindhoven (NL)
(74) Representative: van Eeuwijk, Alexander Henricus Waltherus
(86) International application number: PCT/EP2014/067722
(87) International publication number: WO 2015/024959

(56) References cited:
- EP-A2- 2 464 175
- WO-A1-2013/034361
- US-A1- 2012 242 526

## Description

The invention relates to the field of methods and devices for exchanging control information in mixed radio systems, such as - but not limited to - IEEE 802.11 (Wi-Fi) and IEEE 802.15.4 (ZigBee).

### BACKGROUND OF THE INVENTION

Well-accepted wireless communication technologies generally operate in frequency bands that are shared among several users, often using different radio systems with different radio frequency (RF) schemes. This is true in particular for WiFi, Bluetooth, and more recently ZigBee. They all three operate in the unlicensed 2.4 GHz band, also known as Industrial, Scientific and Medical (ISM) band, which has been key to the development of a competitive and innovative market for wireless embedded devices.

Mixed radio systems have been developed for enabling more flexible and effective control of wireless systems.

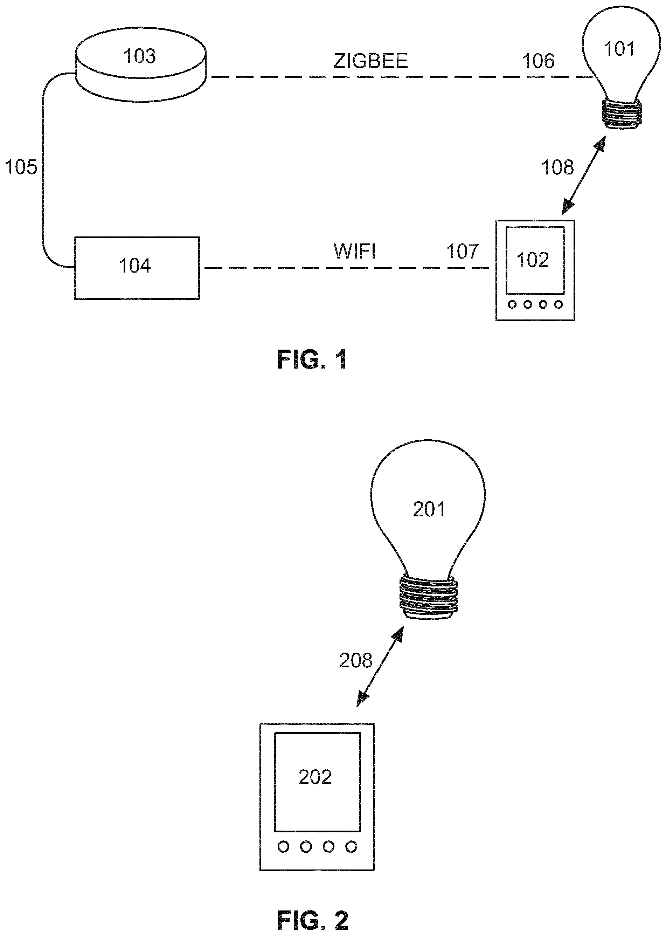

Fig. 1 shows a personal wireless lighting system as an example of a mixed radio system which is configured to allow control of a lamp 101 via a mobile device such as a smart phone 102, as a user interface (UI). The lamp 101 comprises a ZigBee/802.15.4 (2.4 GHz) radio receiver or transceiver (not shown). The smart phone 102 comprises a WiFi/802.11 (2.4 GHz) radio transmitter or transceiver (not shown). Furthermore, a WiFi router 104 is connected via an Ethernet cable 105 to a smart bridge 103 which provides a ZigBee connection 106 to the lamp 101. The smart phone may establish a WiFi connection 107 to the WiFi router 104.

If a user of the smart phone 102 wants the lamp 101 to execute a command, the smart phone can send a corresponding command via a route consisting of the WiFi connection 107, the WiFi router 104, the Ethernet cable 105, the smart bridge 103 and the ZigBee connection 106 to the lamp 103 to thereby switch on or off, dim or change the color of the light generated by the lamp 101.

In the above architecture it may be that the system shall be designed such that the lamp 101 only executes certain commands from the smart phone 102 only if the smart phone is very close by, e.g., within about 20 cm. Such a requirement may be made as part of the security architecture: for certain security sensitive commands (e.g. to reset the lamp 101 and/or make it search for a new open network to join) may be protected with such an 'execute only if close by' constraint to ensure that attackers from far away cannot 'steal' control over a lamps in a home. Such a requirement may also made to support a user's desire to execute a command 'on the nearest lamp', with the system then having to determine what the nearest lamp to the smart phone 102 currently is. In the latter case, there is no security issue, but a convenience issue.

Moreover, the lamp 101 may not have established the ZigBee connection 106 to the smart bridge 103 yet - it may have been just unpacked from its box, or it might have been bought from a previous owner. The smart phone 102 might have a connection to the WiFi router 104, and via that WiFi router 104 to some smart bridge 103. Then, operation of the control system would first require establishment of the ZigBee connection 106 before any light control is possible. It would be convenient, and increase security, to support this establishment in some way based on proximity.

Additionally, a user may want to configure/use a new smart phone controller (e.g. on an open Wi-Fi network), whereas the commands shall only be executed by the lamps already on the ZigBee network, if the controller is indeed in its proximity.

The above problems could be solved by equipping the smart phone with a ZigBee compatible radio transmitter or transceiver, so that the smart phone 102 can send a ZigBee packet (containing the command or referring to the command) directly to the lamp 101, with the lamp 101 measuring the signal strength of this packet as it receives it, and the lamp 101 only executing the command if the signal strength is above a certain threshold.

Alternatively, the lamp could be equipped with a WiFi compatible receiver or transceiver.

However, these options add substantial cost due to increased hardware complexity at the lamp 101 and/or smart phone 102.

The US 2012/0242526 A1 discloses a system and method for facilitating appliance control via a smart device, wherein a bridge unit provides RF reception and command translation functionality while additionally accepting direct control inputs for a limited number of commonly used appliance command functions. More sophisticated interface functions are provided by a control application of the smart device.

Furthermore the WO 2013/034361 A1 discloses an illumination control system which comprises a mobile phone, a WLAN/Bluetooth-ZigBee-secondary controller, and a plurality of illuminating devices with a ZigBee-module. The mobile phone and the WLAN/Bluetooth-ZigBee-secondary controller WLAN/Bluetooth, and the WLAN/Bluetooth-ZigBee-secondary controller and a plurality of illuminating devices with the ZigBee module realize a wireless link through the wireless ZigBee communication protocol. Thereby, a user may control the illuminating devices through WLAN/Bluetooth-ZigBee secondary controller by means of the mobile phone. The mobile phone may give some commands, and the illuminating devices may identify these commands if the ZigBee protocol has the same command definitions.

### SUMMARY OF THE INVENTION

It is an object of the present invention to provide an improved control system for a mixed radio access system, by means of which hardware complexity does not have to be increased.

This object is achieved by a device as claimed in claim 1 or 7, by a method as claimed in claims 13 or 14, by a system as claimed in claim 12, and by a computer program product as claimed in claim 15.

Accordingly, the above-mentioned problems can be solved without increasing hardware complexity. The proposed solution advantageously makes use of a channel energy detect feature that may be present in specific radio systems or standards, such as IEEE 802.15.4 (ZigBee). Security can be increased by measuring, at the controlled device, the energy amount in one or more of its overlapping radio channels to detect that the controlling device is close by and execute the commanded action.

According to a first aspect, the control device may be adapted to use different predetermined patterns for signaling different control commands to the controlled device. Thereby, flexible and fast control of the other radio system's device can be achieved without requiring any established network connections via routers and/or bridges.

According to a second aspect which can be combined with the first aspect, the control device may be a portable device, in particular a smart phone or tablet computer. In a more specific implementation example, the smart phone or tablet computer may be adapted to activate an app for sending a command which defines the at least one predetermined energy pattern. This allows secure control of the controlled device by any type of mobile device and, more specifically, by simply downloading a respective app.

In another more specific implementation example of the second aspect, the smart phone or tablet computer may be adapted to offer access to a secured application programming interface only to predetermined trusted apps, wherein the secured application programming interface is adapted to cause the smart phone or the tablet computer to transmit predetermined energy patterns that affect at least two different channels of the second radio system. Since a normal app cannot achieve the required channel switch, detection of the energy patterns on the different channels can be interpreted as a proof for a trustworthy app.

According to a third aspect which can be combined with the first or second aspect, the control information may be transmitted by the control device as a part of a security protocol, the security protocol involving also communication between the control device and a bridge device for bridging the first and second radio systems to a controlled device, and wherein a successful completion of the security protocol grants the control device rights to control the controlled device. Thereby, security can be further enhanced by a verification option.

According to a fourth aspect which can be combined with any one of the above first to third aspects, the action of the controlled device may comprise execution of a command that is received by the controlled device using the second radio system, or the action may comprise granting of a right to a control device, the right including the right to send commands which are to be executed by the controlled device. Thus, flexible control options can be provided.

According to a fifth aspect which can be combined with any one of the above first to fourth aspects, the controlled device may be a controllable load, in particular a controllable lamp of a lighting system. This provides the advantage that sophisticated load or light control systems can be installed by simply replacing conventional loads or lamps by the proposed controllable loads or lamps.

According to a sixth aspect which can be combined with any one of the above first to fifth aspects, the controlled device may be adapted to determine presence of a control device in response to a detection of the predetermined energy pattern, and to inform a bridge device for bridging the first and second radio systems about the determined presence. This provides the advantage that only such commands are executed by the lamp, where the controller of the control device is indeed in sufficient proximity.

According to a seventh aspect which can be combined with any one of the above first to sixth aspects, the controlled device may be adapted to detect a first predetermined energy pattern and a second predetermined energy pattern in different channels of the first radio system. This measures leads to an enhanced detection reliability, since two energy patterns in two channels are required.

It is noted that the control device and the controlled device may be implemented based on discrete hardware circuitry with discrete hardware components, an integrated chip, or an arrangement of chip modules, or based on a signal processing device or chip controlled by a software routine or program stored in a memory, written on a computer readable medium, or downloaded from a network, such as the Internet.

It shall be understood that the devices of claims 1 and 7, the system of claim 12, the methods of claims 13 and 14, and the computer program of claim 15 may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows a schematic architecture of a mixed radio system where a mobile device is connected to a lamp via radio connections of two different radio systems;
Fig. 2 shows a schematic architecture of a mixed radio system according to a first embodiment where a mobile device using a first radio system directly sends a command to lamp using a second radio system;
Fig. 3 shows a frequency diagram with a channel distribution scheme of mixed radio systems as used in various embodiments;
Fig. 4 shows a schematic flow diagram which indicates steps of a mixed radio system communication procedure according to a second embodiment;
Fig. 5 shows schematic waveform diagrams of overlapping channels in the second embodiment;
Fig. 6 shows a schematic flow diagram which indicates steps of a mixed radio system communication procedure according to a third embodiment;
Fig. 7 shows a schematic flow diagram which indicates steps of a mixed radio system communication procedure according to a fourth embodiment; and
Fig. 8 shows schematic waveform diagrams of overlapping channels in modification of various embodiments.

### DETAILED DESCRIPTION OF EMBODIMENTS

Embodiments of the present invention are now described based on a lighting or illumination system with radio access via mixed radio systems comprising WiFi and ZigBee/802.15.4 which share the same 2.4 GHz frequency band.

Referring back to the architecture of Fig. 1, security can be added to the case where the user of the smart phone 102 wishes to control the lamp 101 to perform a certain action (e.g. switch on or off, light dimming, change of color, etc.). According to various embodiments, the lamp 101 is adapted to only accept certain commands (from the smart phone 102) if it can detect that the smart phone 102 is located sufficiently close to the controllable lamp 101. To achieve this, the smart phone 102 can prove that it is located close to the lamp 101 by emitting with its WiFi radio one or more packets of a specific pattern (e.g. specified lengths/time and/or spacing etc., content of the packets not necessarily matters) using at least one overlapping channel of its WiFi radio system, with its WiFi radio energy reaching the lamp 102 via a direct wireless route 108 . The overlapping WiFi channel is to be understood as a WiFi channel that overlaps with a certain ZigBee/802.15.4 channel. At the same time, the lamp 101 measures the energy in one or more radio channels of its ZigBee radio system. The packets will cause the lamp 101 to measure periods or patterns of very high energy in the channel(s). This high energy, and optionally, other properties of the measurements, will allow the lamp 101 to detect that the smart phone 102 is indeed close by. Note that the WiFi packets might also be received by the WiFi router 104. In some embodiments, the packet contents may be designed such that they cause the router to forward information to the smart bridge 103, which then further communicates with the lamp 101. So, in these embodiments, information will reach the lamp in two ways.

Fig. 2 shows a schematic architecture of a mixed radio system according to a first embodiment where a mobile device using a first radio system directly sends a command to lamp using a second radio system.

In Fig. 2, a lamp 201 does not have a network connection to any smart bridge yet - it may have been just unpacked from its box, or it might have been bought from a previous owner. A smart phone 202 might have a connection to a WiFi router (not shown in Fig. 2), and via that WiFi router to some smart bridge (not shown in Fig. 2). However whether or not it does is irrelevant for the control access to the lamp 201, as explained in more detail below.

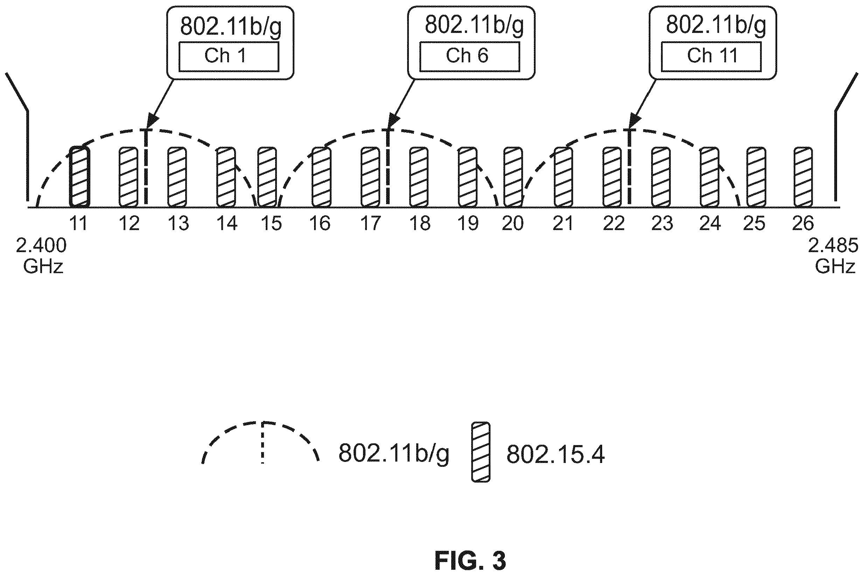

Available overlapping channels are now discussed based on Fig. 3.

Fig. 3 shows a frequency diagram with a channel distribution scheme of WiFi and ZigBee radio systems. In the channel arrangement of Fig. 3, bars indicate ZigBee channels according to the IEEE 802.15.4 specification, and arc sections indicate typical spectrum occupancies of some IEEE 802.11b/g channels. As can be gathered from Fig. 3, the commonly used WiFi channel 1 overlaps with IEEE 802.15.4 (ZigBee) channels 11-14, the commonly used WiFi channel 6 overlaps with IEEE 802.15.4 (ZigBee) channels 16-19, and the commonly used WiFi channel 11 overlaps with IEEE 802.15.4 (ZigBee) channels 21-24.

These overlapping channels can be used for providing the proposed energy based communication between the two radio systems, as explained in more detail in the following embodiments.

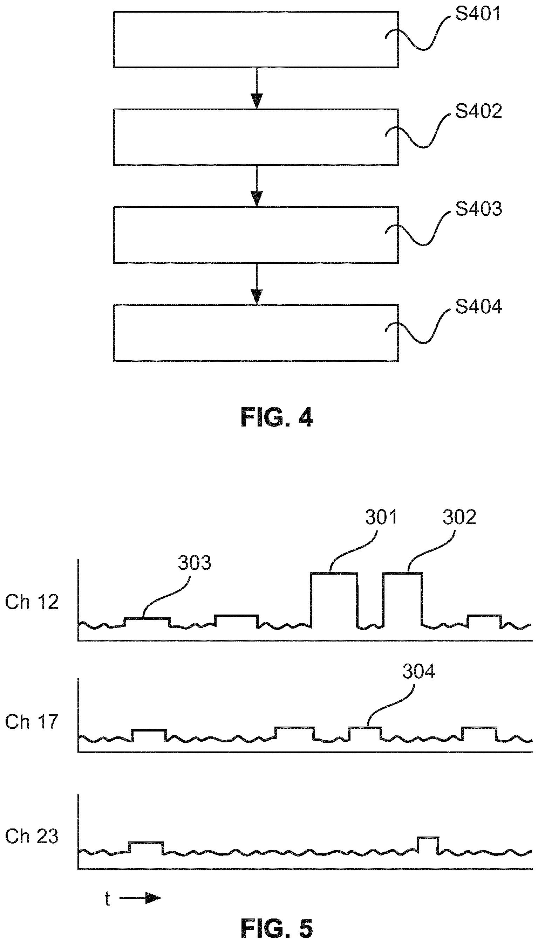

Fig. 4 shows a schematic flow diagram which indicates steps of a mixed radio system communication procedure according to a second embodiment with reference to the situation in Fig. 1.

In step S401, the smart phone 102 sends a command to the lamp 101 via a route comprising the WiFi connection 107, the WiFi router 104, the Ethernet cable 105, the smart bridge 103 and the ZigBee connection 106. Then, in step S402, the smart phone 102, in proximity of the lamp 101, emits a few extra Wifi packets on its overlapping WiFi channel, e.g. two packets of 2 ms duration spaced 180 ms apart. The programmer of an app provided on the smart phone 102 and containing the UI may realize this step by e.g. coding that two User Datagram Protocol (UDP) packets are sent to a Wifi access point, with a timer delay in between. Exact control over the duration of each packet might not be available to the app programmer. Usually it is determined not just by the packet size in bytes, but also by the PHY (physical protocol level) transmit rate chosen by the transmit rate control algorithms governing the WiFi connection 107. However, exact control over the packet size is not necessary.

In connection with the present invention, an app is considered to be a mobile application (or mobile app) which is a software application designed to run on smart phones, tablet computers and other mobile devices. They are usually available through application distribution platforms, which are typically operated by the owner of the mobile operating system. Usually, they are downloaded from the platform to a target device, but sometimes they can be downloaded to laptops or desktops. If the smart phone 102 is replaced by another type of computer device or smart device (e.g. a laptop or the like), the term "app" is intended to cover computer apps or similar software applications as well.

It is noted that the specific WiFi channel used to send the packets on is not particularly relevant, as long as it is an overlapping channel in the 2.4 Ghz band. As a result of step S401, and in parallel with step S402, the lamp 101 measures the energy in different IEEE 802.15.4 (ZigBee) channels, taking samples over a period of time. This may be achieved for example by using the IEEE 802.15.4 channel scan features provided in a typical IEEE 802.15.4 chip. Note that the standard IEEE 802.15.4 channel energy scan feature has some limitations on the speed and time resolution by which channels can be scanned. The exact length of a WiFi packet in the above example cannot be detected accurately using the standard scanning feature, as the scanning time resolution available is too coarse. The spacing between WiFi packets in the above example can however be detected with a good-enough degree of accuracy. Many 802.15.4 radio chipsets give the programmer a way (outside of the scope of what is standardised in IEEE 802.15.4) to measure energy in a channel that has a much higher time resolution than that of the standard IEEE 802.15.4 channel energy scan feature. Use of such a fast measurement mechanism can be advantageous in cases where it is desirable to transmit a lot of information quickly via the energy channel 208.

Fig. 5 shows schematic waveform diagrams of channels 12, 17 and 23 containing the measurement results obtained at the lamp 101.

In step S403, the lamp 101 analyses the measurement results shown in Fig. 5 and finds two peaks 301 and 302 in one channel (i.e. IEEE 802.15.4 channel 12) of expected duration and spaced apart as expected, and with a signal strength (energy level) above a predetermined threshold. Other peaks like the peaks 303 and 304 in channels 12 and 17, respectively in Fig. 5, which are below the predetermined threshold and which are caused by WiFi users further away from the lamp 101, are ignored.

Having successfully found the expected peaks, confirming proximity of a Wi-Fi device, the lamp 101 executes in step S404 the command sent in step S401.

It is noted that the lamp 101 might be adapted to only perform the steps S402 to S404 upon particular triggers, e.g. upon reception of commands originated by the smart bridge 103 on behalf of the smart phone 102, or for commands of a particular format or profile or cluster. Other ZigBee commands may be executed immediately upon reception, or require another type of condition check.

The proposed solution according to the second or other embodiments can also be used for secure joining of a new lamp to the system. The reception of the proximity or command signal from the smart phone 102 may trigger the lamp 101 to accept joining or binding or configuration commands generated and forwarded by the smart bridge 130 or another ZigBee device outside the proximity range.

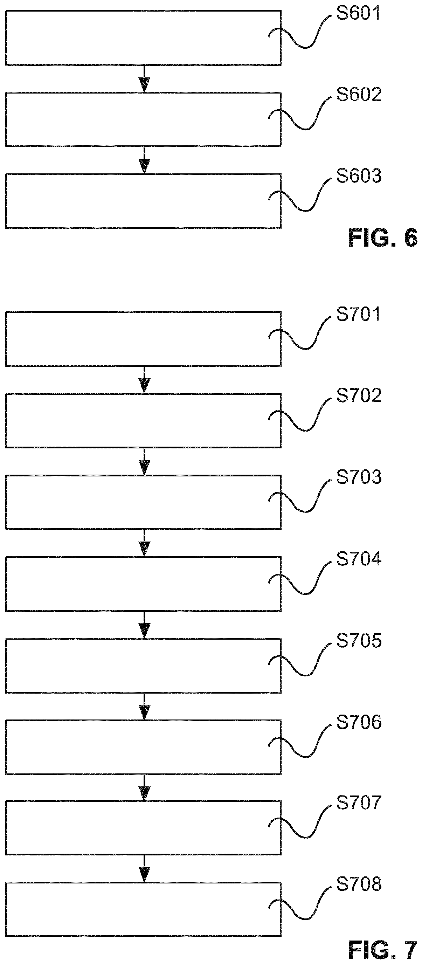

Fig. 6 shows a schematic flow diagram which indicates steps of a mixed radio system communication procedure according to a third embodiment with reference to the situation of the first embodiment of Fig. 2. In a first step S601, the lamp 202 determines that it cannot find a smart bridge to connect to and therefore enters a mode where it continuously scans certain 802.15.4/ZigBee channels. Then, in step S602, a user of the smart phone 201 activates an app on the smart phone 202 to send a command (e.g. "reset and search for a new network") to the lamp 101. To send this command, the smart phone 202 emits in step S602 a few WiFi packets according to a predetermined pattern on its WiFi channel, e.g. two packets of 2 ms duration spaced 180 ms apart, or two packet trains, each lasting 60 ms, spaced 300 ms apart, to cause peaks in the measurements of the lamp 201. Having detected the peaks and having analysed the peaks to detect that they are high enough and that these represent a smart phone attempting to send a certain command, the lamp executes in step S603 the command derived from the received signal.

Of course, different numbers of packets and/or different delay patterns may be used in all embodiments to signal different commands. Also, not all of the packets sent need to be at the same energy level: differences in the transmit power used to send different packets could also be used to encode information. Of course, at least one packet needs to be sent with a very high transmit power level, to create at least one peak that is high enough for the lamp to conclude that the phone is indeed near.

Fig. 7 shows a schematic flow diagram which indicates steps of a mixed radio system communication procedure according to a fourth embodiment with reference to the situation of Fig. 1. This embodiment relates to the initially described problem associated with the new smart phone controller. In step S701, the new smart phone 102, not yet trusted by the smart bridge 130, tries to send a conventional command to the lamp 101 in a WiFi packet via the route comprising the WiFi connection 107, the WiFi router 104, the Ethernet cable 105, the smart bridge 103 and the ZigBee connection 106. Since the smart bridge 130 does not trust the smart phone 102, it does not forward the command to the ZigBee connection 106 (step S702).

Then, in step S703, the smart phone 102, in proximity of lamp 101, emits a few extra Wifi packets according to a predetermined pattern on its channel, e.g. two packets of 2 ms duration spaced 20 ms apart. The programmer of the app that contains the UI on the smart phone 102 can realise this step by e.g. coding that two UDP packets are sent to the Wifi access point (i.e. WiFi router 104) with a timer delay in between. In step S704, the lamp 101 periodically measures the energy on the operational IEEE 802.15.4 (ZigBee) channel, using the 802.15.4 channel scan features of its 802.15.4 chip.

It is assumed that the same measurement results as shown in Fig. 5 are also obtained in step S704. Then, in step S705, the lamp 101 analyses the measurement results and finds the two peaks 301 and 302 in one channel (i.e. channel 12), of expected duration and spaced apart as expected, and with a signal strength (energy level) above a threshold. The other peaks 303 and 304 in channels 12 and 17, respectively, are below the threshold and can thus be assumed as being are caused by WiFi users further away from the lamp 101. Consequently, they can be ignored.

Having successfully found the expected peaks 301 and 302, confirming proximity of a Wi-Fi device, the lamp 101 informs the smart bridge 103 in step S706. Upon reception of lamp's command, the smart bridge 130 forwards the packet from the smart phone 102 via the ZigBee connection 107 to the lamb 101. Finally, in step S708, the lamp 101 executes the command signalled by the content of the packet.

In a modification of the fourth embodiment, the smart phone 102 may send a random number to the lamp 101 as part of the command in step S701, which then needs to be encoded in step S703 by the predetermined pattern using different numbers of packets and/or different delay patterns, adding an extra layer of security.

In a further modification of at least some of the above embodiments, it could be prevented that any random malicious app programmer can make an app that causes the lamp 101, 201 to respond to a command if the smart phone 102, 202 happens to be nearby. In this modification, the operating system of the smart phone 102, 202 may be adapted to offer access to a special secured API only to special, trusted apps.

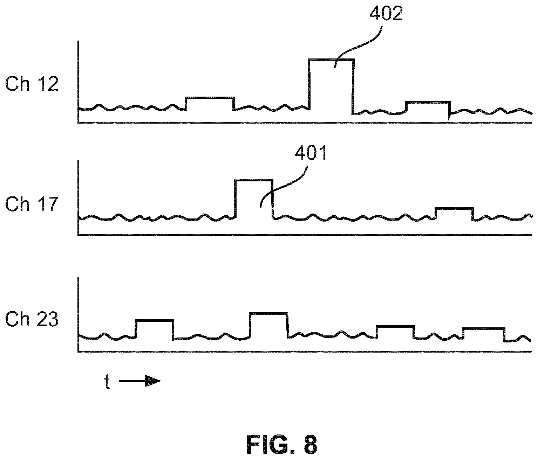

Fig. 8 shows schematic waveform diagrams of an improved energy pattern as generated by the special secured API of the above modification.

This API, when used, causes the smart phone's operating system (OS) to control the WiFi hardware in the smart phone 102, 202 to emit e.g. two packets 401 and 402 on different WiFi channels (e.g. channels 12 and 17), as shown in Fig. 8. A normal app cannot effect such a channel switch via its normal APIs, so the lamp 101, 201 (and/or the smart bridge 103) can use the detection of the pattern in Fig. 8 as a proof that a privileged app was involved.

To summarize, methods and devices for exchanging control information in mixed radio systems have been described. Security is added in cases where a user of a first wireless device wants to command a second wireless device to perform a certain action. The first and second wireless devices use different radio systems or standards (e.g. WiFi and ZigBee/802.15.4) but their radios do operate on the same frequency band (e.g. 2.4 GHz). To add security, the second wireless device (101) will only accept certain commands if it can detect that the first wireless device (102) is physically close-by. To prove that the first device (102) is close-by, it emits a predetermined energy pattern, e.g., one or more packets (the contents do not matter, while their lengths/time spacing may) using its radio system. At the same time, the second wireless device (101) measures the energy in one or more of its overlapping radio channels to detect whether the first wireless device (102) is close by and, if so, execute the commanded action.

Where, in the flow diagram descriptions above, the lamp 101 takes some action, it should be noted that this action might not be controlled fully by an algorithm that runs inside the lamp itself - the control algorithm might also be more distributed. In one extreme case, software on the smart bridge 103 may initiate all actions on the lamp by sending commands to it.

While the invention has been illustrated and described in detail in the drawings and foregoing description, such illustration and description are to be considered illustrative or exemplary and not restrictive. The invention is not limited to the disclosed embodiment with the lamps or luminaires as load devices. It can be implemented in connection with any type loads, sensors, switches etc. for providing control via mixed radio networks. For example, the present invention can be used for any type of 'smart home' devices that do not have a WiFi radio access, but that could be controlled and commissioned with a smart phone based app.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage.

The foregoing description details certain embodiments of the invention. It will be appreciated, however, that no matter how detailed the foregoing appears in text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

A single unit or device may fulfill the functions of several items recited in the claims. The mere fact that certain measures are recited in mutually different dependent claims does not indicate that a combination of these measures cannot be used to advantage.

The described operations like those indicated in Figs. 4, 6 and 7 can be implemented as program code means of a computer program and/or as dedicated hardware. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. A control device (102; 202) for transmitting control information via at least one first channel of a first radio system to a receiver of a second radio system, **characterised in that** said device (102; 202) is adapted to select said at least one first channel of said first radio system so as to overlap with at least one second channel of said second radio system, and to transmit on said selected at least one first channel at least one predetermined energy pattern which indicates said control information, said energy pattern comprising a plurality of data packets, which contents do not matter, said energy pattern being defined by at least one of a predetermined length of, or spacing between the data packets or a set of different channels on which the data packets are transmitted.

2. The control device of claim 1, wherein said control device (102; 202) is adapted to use different predetermined patterns for signaling different control commands to a controlled device (101; 201).

3. The control device of claim 1, wherein said control device is a portable device, in particular a smart phone (102; 202) or tablet computer.

4. The control device of claim 3, wherein said smart phone (102; 202) or said tablet computer is adapted to activate an app for sending a command which defines said at least one predetermined energy pattern.

5. The control device of claim 4, wherein said smart phone (102; 202) or tablet computer is adapted to offer access to a secured application programming interface only to predetermined trusted apps, and wherein said secured application programming interface is adapted to cause said smart phone (102; 202) or said tablet computer to transmit predetermined energy patterns that affect at least two different channels of said second radio system.

6. The control device of claim 1, wherein said control information is transmitted by said control device (102; 202) as a part of a security protocol, said security protocol involving also communication between said control device (102; 202) and a bridge device (103) for bridging said first and second radio systems to a controlled device (101; 201), and wherein a successful completion of the security protocol grants said control device (102; 202) rights to control said controlled device (101; 201).

7. A controlled device (101; 201) for receiving control information in a second radio system, **characterised in that** said device (101; 201) is adapted to perform an energy detection scan in at least one channel of said second radio system so as to detect at least one predetermined energy pattern of a first radio system in an overlapping channel, and being adapted to perform an action if said at least one energy pattern exceeds a predetermined threshold, said energy pattern comprising a plurality of data packets, which contents do not matter, said energy pattern being defined by at least one of a predetermined length of, or spacing between the data packets or a set of different channels on which the data packets are transmitted.

8. The controlled device of claim 7, wherein said action comprises execution of a command that is received by said controlled device (101; 201) using said second radio system, or wherein said action comprises granting of a right to a control device (102; 202), said right including the right to send commands which are to be executed by said controlled device (101; 201).

9. The controlled device of claim 7, wherein said controlled device (101; 201) is adapted to detect a first predetermined energy pattern and a second predetermined energy pattern in different channels of said first radio system.

10. The controlled device of claim 7, wherein said controlled device (101; 201) is adapted to determine presence of a control device (102; 202) in response to a detection of said predetermined energy pattern, and to inform a bridge device (103) for bridging said first and second radio system about said determined presence.

11. The controlled device of claim 7, wherein said controlled device is a controllable load, in particular a controllable lamp (101; 102) of a lighting system.

12. A wireless control system comprising at least one control device of claim 1 and at least one controlled device of claim 7.

13. A method of controlling a controlled device (101; 201), said method comprising a control device performing the steps of:
transmitting control information via at least one first channel of a first radio system to a receiver of a second radio system, **characterised by** selecting said at least one first channel of said first radio system so as to overlap with at least one second channel of said second radio system, and transmitting on said selected at least one first channel at least one predetermined energy pattern which directly indicates said control information, said energy pattern comprising a plurality of data packets, which contents do not matter, said energy pattern being defined by at least one of a predetermined length of, or spacing between the data packets or a set of different channels on which the data packets are transmitted.

14. A method of receiving control information by a controlled device (101;201) in a second radio system, said method being **characterised in that** it comprises the steps of:
performing an energy detection scan in at least one channel of said second radio system so as to detect at least one predetermined energy pattern of a first radio system in an overlapping channel;
deriving a command defined by said at least one predetermined energy pattern; said energy pattern comprising a plurality of data packets, which contents do not matter, said energy pattern being defined by at least one of a predetermined length of, or spacing between the data packets or a set of different channels on which the data packets are transmitted;
and
executing said command if said at least one energy pattern exceeds a predetermined threshold.

15. A computer program product comprising code means for producing the steps of claim 13 or 14 when run on a computer device.

## Patentansprüche

1. Steuervorrichtung (102; 202) zur Übertragung von Steuerinformationen über mindestens einen ersten Kanal eines ersten Funksystems zu einem Empfänger eines zweiten Funksystems,
**dadurch gekennzeichnet, dass**
die Vorrichtung (102; 202) so eingerichtet ist, dass sie den mindestens einen ersten Kanal des ersten Funksystems so auswählt, dass sich dieser mit mindestens einem zweiten Kanal des zweiten Funksystems überlappt, und auf dem ausgewählten, mindestens einen ersten Kanal mindestens ein vorgegebenes Energiemuster überträgt, das die Steuerinformationen anzeigt, wobei das Energiemuster eine Mehrzahl von Datenpaketen umfasst, deren Inhalte nicht von Bedeutung sind, wobei das Energiemuster durch zumindest eine vorgegebene Länge der Datenpakete oder einen Abstand zwischen den Datenpaketen oder einen Satz von verschiedenen Kanälen, auf denen die Datenpakete übertragen werden, definiert wird.

2. Steuervorrichtung nach Anspruch 1, wobei die Steuervorrichtung (102; 202) so eingerichtet ist, dass sie verschiedene vorgegebene Muster verwendet, um einer gesteuerten Vorrichtung (101; 201) verschiedene Steuerbefehle zu signalisieren.

3. Steuervorrichtung nach Anspruch 1, wobei die Steuervorrichtung ein portables Gerät, vorzugsweise ein Smartphone (102; 202) oder ein Tabletcomputer, ist.

4. Steuervorrichtung nach Anspruch 3, wobei das Smartphone (102; 202) oder der Tabletcomputer so eingerichtet ist, dass es/er eine App so aktiviert, dass sie einen Befehl übermittelt, der das mindestens eine vorgegebene Energiemuster definiert.

5. Steuervorrichtung nach Anspruch 4, wobei das Smartphone (102; 202) oder der Tabletcomputer so eingerichtet ist, dass es/er nur vorgegebenen, vertrauenswürdigen Apps Zugriff auf eine gesicherte Applikationsprogrammierschnittstelle bietet, und wobei die gesicherte Applikationsprogrammierschnittstelle so eingerichtet ist, dass sie das Smartphone (102; 202) oder den Tabletcomputer veranlasst, vorgegebene Energiemuster zu übertragen, die mindestens zwei verschiedene Kanäle des zweiten Funksystems beeinflussen.

6. Steuervorrichtung nach Anspruch 1, wobei die Steuerinformationen von der Steuervorrichtung (102; 202) als ein Teil eines Sicherheitsprotokolls übertragen werden, wobei das Sicherheitsprotokoll ebenfalls Kommunikationen zwischen der Steuervorrichtung (102; 202) und einer Brückenvorrichtung (103) beinhaltet, um das erste und zweite Funksystem mit einer gesteuerten Vorrichtung (101; 201) in Brücke zu schalten, und wobei eine erfolgreiche Komplettierung des Sicherheitsprotokolls der Steuervorrichtung (102; 202) Rechte zur Steuerung der gesteuerten Vorrichtung (101; 201) einräumt.

7. Gesteuerte Vorrichtung (101; 201) zum Empfang von Steuerinformationen in einem zweiten Funksystem,
**dadurch gekennzeichnet, dass**
die Vorrichtung (101; 201) so eingerichtet ist, dass sie einen Energiedetektions-Scan auf mindestens einem Kanal des zweiten Funksystems durchführt, um zumindest ein vorgegebenes Energiemuster eines ersten Funksystems auf einem Überlappungskanal zu detektieren, und so eingerichtet ist, dass sie eine Maßnahme ergreift, wenn das mindestens eine Energiemuster einen vorgegebenen Schwellenwert überschreitet, wobei das Energiemuster eine Mehrzahl von Datenpaketen umfasst, deren Inhalte nicht von Bedeutung sind, wobei das Energiemuster durch zumindest eine vorgegebene Länge der Datenpakete oder einen Abstand zwischen den Datenpaketen oder einen Satz von verschiedenen Kanälen, auf denen die Datenpakete übertragen werden, definiert wird.

8. Gesteuerte Vorrichtung nach Anspruch 7, wobei besagte Maßnahme die Ausführung eines Befehls umfasst, der von der gesteuerten Vorrichtung (101; 201) unter Inanspruchnahme des zweiten Funksystems empfangen wird, oder wobei besagte Maßnahme beinhaltet, dass einer Steuervorrichtung (102; 202) ein Recht eingeräumt wird, wobei dieses Recht das Recht umfasst, Befehle zu übermitteln, die von der gesteuerten Vorrichtung (101; 201) auszuführen sind.

9. Gesteuerte Vorrichtung nach Anspruch 7, wobei die gesteuerte Vorrichtung (101; 201) so eingerichtet ist, dass sie ein erstes vorgegebenes Energiemuster und ein zweites vorgegebenes Energiemuster auf verschiedenen Kanälen des ersten Funksystems detektiert.

10. Gesteuerte Vorrichtung nach Anspruch 7, wobei die gesteuerte Vorrichtung (101; 201) so eingerichtet ist, dass sie in Reaktion auf eine Detektion des vorgegebenen Energiemusters das Vorhandensein einer Steuervorrichtung (102; 202) ermittelt und eine Brückenvorrichtung (103) zur Überbrückung des ersten und zweiten Funksystems über das ermittelte Vorhandensein informiert.

11. Gesteuerte Vorrichtung nach Anspruch 7, wobei die gesteuerte Vorrichtung eine steuerbare Last, vorzugsweise eine steuerbare Lampe (101; 102) eines Beleuchtungssystems, ist.

12. Drahtloses Steuersystem mit mindestens einer Steuervorrichtung nach Anspruch 1 und mindestens einer gesteuerten Vorrichtung nach Anspruch 7.

13. Verfahren zur Steuerung einer gesteuerten Vorrichtung (101; 201), wobei das Verfahren beinhaltet, dass eine Steuervorrichtung die folgenden Schritte ausführt, wonach:
Steuerinformationen über mindestens einen ersten Kanal eines ersten Funksystems zu einem Empfänger eines zweiten Funksystems übertragen werden, **dadurch gekennzeichnet, dass**
der mindestens eine erste Kanal des ersten Funksystems so ausgewählt wird, dass sich dieser mit mindestens einem zweiten Kanal des zweiten Funksystems überlappt, und auf dem ausgewählten, mindestens einen ersten Kanal mindestens ein vorgegebenes Energiemuster übertragen wird, das die Steuerinformationen unmittelbar anzeigt, wobei das Energiemuster eine Mehrzahl von Datenpaketen umfasst, deren Inhalte nicht von Bedeutung sind, wobei das Energiemuster durch zumindest eine vorgegebene Länge der Datenpakete oder einen Abstand zwischen den Datenpaketen oder einen Satz von verschiedenen Kanälen, auf denen die Datenpakete übertragen werden, definiert wird.

14. Verfahren zum Empfang von Steuerinformationen durch eine gesteuerte Vorrichtung (101; 201) in einem zweiten Funksystem, wobei das Verfahren **dadurch gekennzeichnet ist, dass** es die folgenden Schritte umfasst, wonach:
ein Energiedetektions-Scan auf mindestens einem Kanal des zweiten Funksystems durchgeführt wird, um mindestens ein vorgegebenes Energiemuster eines ersten Funksystems auf einem Überlappungskanal zu detektieren;
ein durch das mindestens eine vorgegebene Energiemuster definierter Befehl abgeleitet wird; wobei das Energiemuster eine Mehrzahl von Datenpaketen umfasst, deren Inhalte nicht von Bedeutung sind,
wobei das Energiemuster durch zumindest eine vorgegebene Länge der Datenpakete oder einen Abstand zwischen den Datenpaketen oder einen Satz von verschiedenen Kanälen, auf denen die Datenpakete übertragen werden, definiert wird; und
der Befehl ausgeführt wird, wenn das mindestens eine Energiemuster einen vorgegebenen Schwellenwert überschreitet.

15. Computerprogrammprodukt mit Codemitteln zur Erzeugung der Schritte nach Anspruch 13 oder 14, wenn dieses auf einem Computergerät abläuft.

## Revendications

1. Dispositif de commande (102 ; 202) pour transmettre des informations de commande via au moins un premier canal d'un premier système de radiocommunication à un récepteur d'un second système de radiocommunication, **caractérisé en ce que** ledit dispositif (102 ; 202) est adapté pour sélectionner ledit au moins un premier canal dudit premier système de radiocommunication de façon à chevaucher au moins un second canal dudit second système de radiocommunication, et pour transmettre sur ledit au moins un premier canal sélectionné au moins un schéma énergétique prédéterminé qui indique lesdites informations de commande, ledit schéma énergétique comprenant une pluralité de paquets de données, dont le contenu n'est pas important, ledit schéma énergétique étant défini par au moins l'un d'une longueur prédéterminée, ou d'un espacement entre les paquets de données ou un ensemble de canaux différents sur lesquels les paquets de données sont transmis.

2. Dispositif de commande selon la revendication 1, dans lequel ledit dispositif de commande (102 ; 202) est adapté pour utiliser des schémas prédéterminés différents pour signaler des ordres de commande différents à un dispositif commandé (101 ; 201).

3. Dispositif de commande selon la revendication 1, dans lequel ledit dispositif de commande est un dispositif portable, en particulier un téléphone intelligent (102 ; 202) ou une tablette informatique.

4. Dispositif de commande selon la revendication 3, dans lequel ledit téléphone intelligent (102 ; 202) ou ladite tablette informatique est adapté pour activer une application pour envoyer un ordre qui définit ledit au moins un schéma énergétique prédéterminé.

5. Dispositif de commande selon la revendication 4, dans lequel ledit téléphone intelligent (102 ; 202) ou ladite tablette informatique est adapté pour offrir un accès à une interface de programmation d'application sécurisée uniquement pour des applications de confiance prédéterminées, et dans lequel ladite interface de programmation d'application sécurisée est adaptée pour amener ledit téléphone intelligent (102 ; 202) ou ladite tablette informatique à transmettre des schémas énergétiques prédéterminés qui affectent au moins deux canaux différents dudit second système de radiocommunication.

6. Dispositif de commande selon la revendication 1, dans lequel lesdites informations de commande sont transmises par ledit dispositif de commande (102 ; 202) dans le cadre d'un protocole de sécurité, ledit protocole de sécurité impliquant également une communication entre ledit dispositif de commande (102 ; 202) et un dispositif de pont (103) servant à former un pont entre lesdits premier et second systèmes de radiocommunication et un dispositif commandé (101 ; 201), et dans lequel un achèvement réussi du protocole de sécurité octroie audit dispositif de commande (102 ; 202) des droits pour commander ledit dispositif commandé (101 ; 201).

7. Dispositif commandé (101 ; 201) pour recevoir des informations de commande dans un second système de radiocommunication, **caractérisé en ce que** ledit dispositif (101 ; 201) est adapté pour réaliser un balayage de détection d'énergie dans au moins un canal dudit second système de radiocommunication de façon à détecter au moins un schéma énergétique prédéterminé d'un premier système de radiocommunication dans un canal chevauchant, et étant adapté pour réaliser une action si ledit au moins un schéma énergétique dépasse un seuil prédéterminé, ledit schéma énergétique comprenant une pluralité de paquets de données, dont le contenu n'est pas important, ledit schéma énergétique étant défini par au moins l'un d'une longueur prédéterminée, ou d'un espacement entre les paquets de données ou un ensemble de canaux différents sur lesquels les paquets de données sont transmis.

8. Dispositif commandé selon la revendication 7, dans lequel ladite action comprend l'exécution d'un ordre qui est reçu par ledit dispositif commandé (101 ; 201) à l'aide dudit second système de radiocommunication, ou dans lequel ladite action comprend l'octroi d'un droit à un dispositif de commande (102 ; 202), ledit droit comportant le droit d'envoyer des ordres qui doivent être exécutés par ledit dispositif commandé (101 ; 201).

9. Dispositif commandé selon la revendication 7, dans lequel ledit dispositif commandé (101 ; 201) est adapté pour détecter un premier schéma énergétique prédéterminé et un second schéma énergétique prédéterminé dans des canaux différents dudit premier système de radiocommunication.

10. Dispositif commandé selon la revendication 7, dans lequel ledit dispositif commandé (101 ; 201) est adapté pour déterminer la présence d'un dispositif de commande (102 ; 202) en réponse à une détection dudit schéma énergétique prédéterminé, et pour informer un dispositif de pont (103) servant à former un pont entre lesdits premier et second systèmes de radiocommunication de ladite présence déterminée.

11. Dispositif commandé selon la revendication 7, dans lequel ledit dispositif commandé est une charge commandable, en particulier une lampe commandable (101 ; 102) d'un système d'éclairage.

12. Système de commande sans fil comprenant au moins un dispositif de commande selon la revendication 1 et au moins un dispositif commandé selon la revendication 7.

13. Procédé de commande d'un dispositif commandé (101 ; 201), ledit procédé comprenant un dispositif de commande réalisant les étapes de :
transmission d'informations de commande via au moins un premier canal d'un premier système de radiocommunication à un récepteur d'un second système de radiocommunication, **caractérisé par** la sélection dudit au moins un premier canal dudit premier système de radiocommunication de façon à chevaucher au moins un second canal dudit second système de radiocommunication, et transmission sur ledit au moins un premier canal sélectionné d'au moins un schéma énergétique prédéterminé qui indique directement lesdites informations de commande, ledit schéma énergétique comprenant une pluralité de paquets de données, dont le contenu n'est pas important, ledit schéma énergétique étant défini par au moins l'un d'une longueur prédéterminée, ou d'un espacement entre les paquets de données ou un ensemble de canaux différents sur lesquels les paquets de données sont transmis.

14. Procédé de réception d'informations de commande par un dispositif commandé (101 ; 201) dans un second système de radiocommunication, ledit procédé étant **caractérisé en ce qu'**il comprend les étapes de :
réalisation d'un balayage de détection d'énergie dans au moins un canal dudit second système de radiocommunication de façon à détecter au moins un schéma énergétique prédéterminé d'un premier système de radiocommunication dans un canal chevauchant ;
dérivation d'un ordre défini par ledit au moins un schéma énergétique prédéterminé ; ledit schéma énergétique comprenant une pluralité de paquets de données, dont le contenu n'est pas important, ledit schéma énergétique étant défini par au moins l'un d'une longueur prédéterminée, ou d'un espacement entre les paquets de données ou un ensemble de canaux différents sur lesquels les paquets de données sont transmis ;
et
exécution dudit ordre si ledit au moins un schéma énergétique dépasse un seuil prédéterminé.

15. Produit-programme d'ordinateur comprenant un moyen de code pour produire les étapes de la revendication 13 ou 14 lorsqu'il est exécuté sur un dispositif d'ordinateur.
